# EUROPEAN PATENT SPECIFICATION

(11) **EP 2 703 684 B1**
(45) Date of publication and mention of the grant of the patent: **04.01.2017**
(21) Application number: 12194792.3
(22) Date of filing: 29.11.2012
(51) Int. Cl.: F16D 69/04, F16D 65/092

(54) **Brake pad**
Bremsbelag
Plaquette de frein

(30) Priority: 31.08.2012 KR 20120095983
(43) Date of publication of application: 05.03.2014
(73) Proprietor: Dawin Friction Co., Ltd., Incheon 405-310 (KR)
(72) Inventor: Na, Jong Tae, Seoul (KR); Kim, Sang Ho, Incheon (KR); Cho, Gi Chul, Gyeonggi-do (KR); Kim, Yu Shin, Incheon (KR)
(74) Representative: Hoffmann Eitle

(56) References cited:
- EP-A1- 1 318 321
- DE-U1- 8 514 607
- US-A1- 2012 211 314

## Description

### CROSS-REFERENCE TO RELATED APPLICATION

This application claims priority of Korean Patent Application No. 2012-0095983, filed 31 August, 2012.

### BACKGROUND

### 1. Field of the Invention

The present invention relates to a brake pad, in particular, to a brake pad formed such that a braking pressure is uniformly transmitted to a friction member when the brake pad is in contact with a brake disc.

### 2. Discussion of Related Art

In general, a brake pad constituting a brake assembly employed in a means of a transportation such as a vehicle, generating a kinetic energy, comprises a friction member having a certain shape, a supporting member for supporting the friction member, a back plate to which the friction member is secured, and a dovetail coupled to a lower surface of the back plate and mounted to the brake system.

By a direct-contact between the friction member and the brake disc which is being rotated according to a driving shaft of a vehicle, a friction force is generated between the brake disc and the friction member so that a rotating means and the brake disc are braked by the above friction force.

Here, a dovetail constituting the brake pad is coupled to a pad holder of a brake system and is slidably placed within the pad holder. A center line of the brake pad is offset from a center line of the pad holder by a certain distance.

In the brake system, a braking pressure is transmitted to regions of the brake pad divided on the basis of center line of the pad holder. Due to the above structure, however, a distribution of the brake pressure applied to a region of the brake pad (that is, the friction member) corresponding to a right side of a central line of the dovetail differs from that applied to a region of the brake pad corresponding to a left side of a central line o the dovetail. The technical fundamental requirement of such brake assembly is to entirely and uniformly transmit the braking pressure to the brake pad. If a difference of the braking pressure occurs on the regions of the brake pad, a local pressure concentration is generated, this local pressure concentration of the brake pad causes an uneven abrasion of the friction member and a hot spot, a hot band and squeal noise of the brake disc.

In order to solve the above problem, a structure in which the friction member and the supporting member is assembled by means of an elastic member has been employed, this structure allows the braking pressure to be entirely and uniformly transmitted to the brake and provides the brake system with a flexibility ratio. However, the use of elastic member causes a reduction of elastic force and a problem of appropriate flexibility ratio.

For example, EP 1 318 321 A1 relates to a vehicle brake pad with a supporting plate and a number of blocks of friction material fitted to the plate, and an elastic tab formed in one piece with the plate for providing a balanced, effective braking action.

The elastic force of the elastic member is gradually deteriorated by a stress which is repeatedly applied to the elastic member and applied heat, the deterioration of elastic force acts as a causes of generation of uneven pressure. As the means for solving the above problem, a thermally-stable insulating material may be disposed between the friction member and the elastic member. However, this structure has the problem of excessive costs for manufacturing and replacing the brake pad.

On the other hand, if the flexibility ratio is small because of the elastic member, the above-mentioned effect cannot be expected under a condition of high pressure, and so there is not much difference in the effect between the above structure and the structure in which the friction member and the supporting member are directly secured to each other. In particular, the flexibility ratio is significantly varied according to various braking conditions (velocity, braking pressure, pressure, humidity and the like), it is difficult to consistently maintain the flexibility ratio.

Due to an elastic force of the elastic member and the flexibility ratio as mentioned above, a slip phenomenon between the friction member and the disc is generated so that the coefficient of friction is rapidly lowered.

In particular, the above phenomenon causes a difference of the braking characteristic by up to 20% or more in the state of low velocity/low pressure, and the braking characteristic obtained under a wet condition is lowered by up to 50% as compared with the braking characteristic obtained under a dry state.

### SUMMARY OF THE INVENTION

An object of the present invention is to provide a brake pad which can be in entirely and uniformly contact with a brake disc.

The brake pad according to the present invention comprises at least one friction member; a supporting member for supporting the friction member, the number of which being the same as that of the friction member; a back plate to which the supporting member is secured, the back plate comprising at least two grooves formed on a surface thereof corresponding to the supporting member, the grooves having a certain length and depth and extended to the longitudinal direction and spaced apart from each other; a dovetail coupled to a lower surface of the back plate, wherein the supporting member comprises a central protrusion protruded downward and a periphery protrusion arranged in the circumferential direction with respect to the central protrusion, and the back plate may comprise a central supporting part formed on a region thereof corresponding to the central protrusion and a periphery supporting part formed on a region thereof corresponding to the periphery protrusion and vertically and moveably coupled to the periphery protrusions, respectively.

In addition, the dovetail consists of a first dovetail and a second dovetail, each of the first and second dovetails may comprise a first portion extended from a central portion in the lengthwise direction; a second portion and a third portion extended from both side ends of the first portion in a first direction, respectively; and a fourth portion extended horizontally from a side end of the third portion toward a side which is opposite to the first portion.

Furthermore, each of the first dovetail and the second dovetail may further comprise a fifth portion extended from an end of the fourth portion in a second direction which is opposite to the first direction. Also, the first dovetail and the second dovetail may have the same shape and be mirror-symmetrically mounted to the back plate.

Here, the back plate may comprise a slit extended from an end of the groove in the direction which is perpendicular to the groove. In addition, the grooves are connected to and formed integrally with each other.

In addition, the back plate may further comprise a groove through hole formed in the groove and extended in the direction in which the groove is extended.

Furthermore, the groove may be offset from a boundary line between the first dovetail and the second dovetail by a certain distance.

### BRIEF DESCRIPTION OF THE DRAWINGS

The above and other objects, features and advantages of the present invention will become more apparent to those of ordinary skill in the art by describing in detail exemplary embodiments thereof with reference to the attached drawings, in which:
FIG. 1 is a plane view of a brake pad according to one embodiment of the present invention;
FIG. 2 is a sectional view taken along the line A-A of FIG. 1 ;
FIG. 3 a is a plane view of a back plate shown in FIG. 1;
FIG. 3b is a plane view of a back plate according to another embodiment of the present invention;
FIG. 4 is a sectional view taken along the line B-B of FIG. 3a;
FIG. 5 is a view illustrating a relation between the brake pad and a pad holder shown in FIG. 2;
FIG. 6a is a plane view of a dovetail shown in FIG. 1;
FIG. 6b is a sectional view taken along the line B-B of FIG. 6a;
FIG. 6c is a sectional view corresponding to FIG. 6b and illustrating a dovetail according to another embodiment of the present invention;
FIG. 6d is a sectional view corresponding to FIG. 6b and illustrating a dovetail according to yet another embodiment of the present invention; and

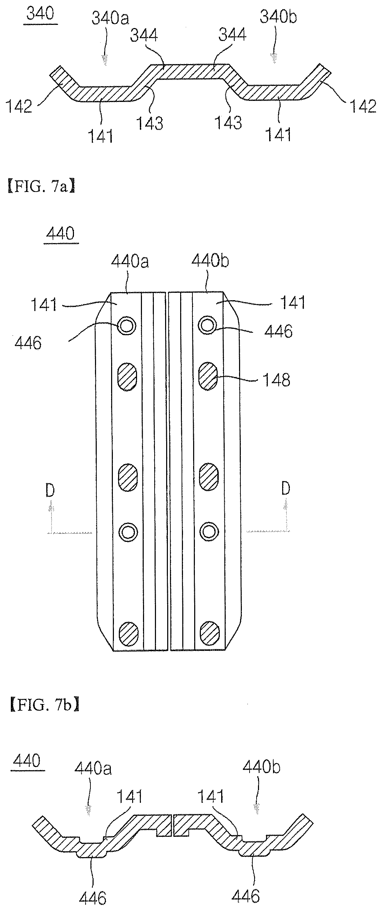

FIG. 7a and FIG. 7b are plane view and sectional view of a dovetail according to further another embodiment.

### DETAILED DESCRIPTION OF EXEMPLARY EMBODIMENTS

Hereinafter, a brake pad according to embodiments of the present invention will be described in more detail with reference to the accompanying drawings. However, the present invention is not limited to the embodiments disclosed below, but can be implemented in various forms. The following embodiments are described in order to enable those of ordinary skill in the art to embody and practice the present invention.

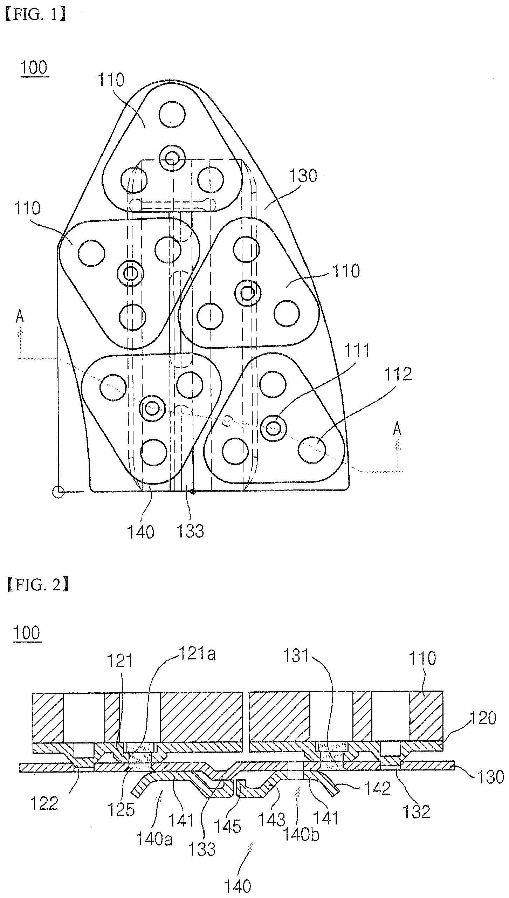

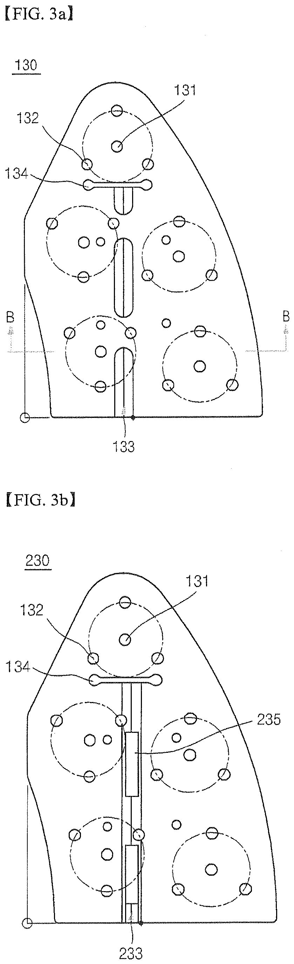

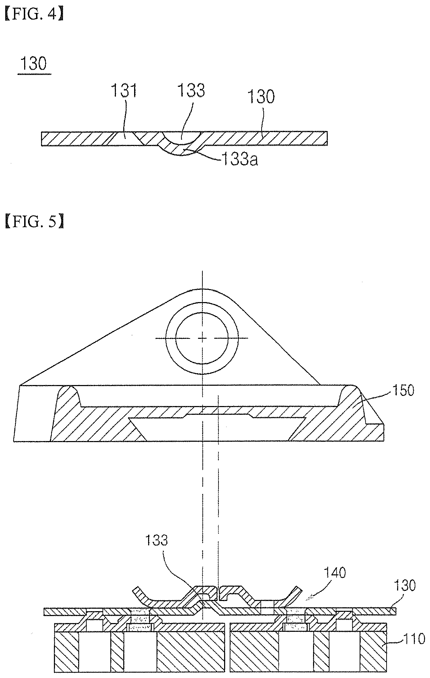

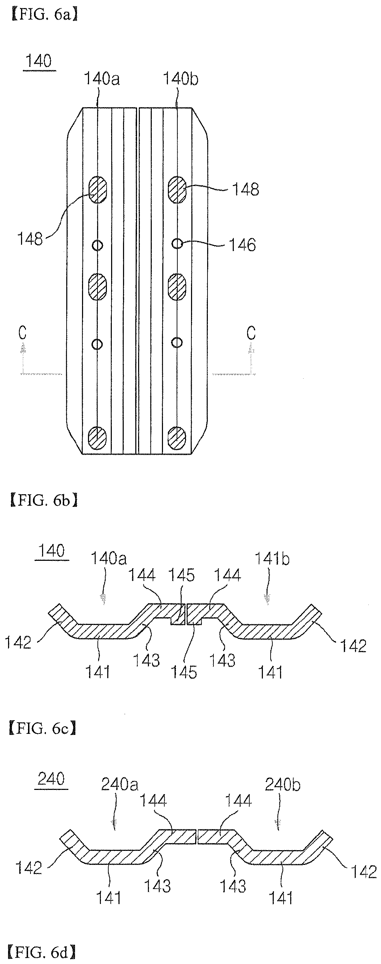

FIG. 1 is a plane view of a brake pad according to one embodiment of the present invention, FIG. 2 is a sectional view taken along the line A-A of FIG. 1, FIG. 3a is a plane view of a back plate shown in FIG. 1, FIG. 3b is a plane view of a back plate according to another embodiment of the present invention, FIG. 4 is a sectional view taken along the line B-B of FIG. 3a, FIG. 5 is a view illustrating a relation between the brake pad and a pad holder shown in FIG. 2, FIG. 6a is a plane view of a dovetail shown in FIG. 1 and FIG. 6b is a sectional view taken along the line B-B of FIG. 6a.

Referring to FIG. 1 to FIG. 6b, a brake pad 100 according to one embodiment of the present invention comprises at least one friction member 110, a supporting member 120 for supporting the friction member 110, a back plate 130 to which the supporting member 120 is coupled, and a dovetail 140 (indicated by a dot line shown in FIG. 1) coupled to a lower surface of the back plate 130 and coupled to a brake system (that is, a pad holder).

The friction member 110 has an approximate triangular horizontal section and is a column with a certain height. However, a shape of the friction member 110 is not limited thereto, and may be formed in the shape of a cylindrical column, a square column or a hexagonal column and the like. The height of the friction member 110 is determined according to a specification and a replacement cycle of the brake pad 100.

The friction member 110 has a central hole 111 and a peripheral hole 112. In order to increase a friction surface area, on the other hands, the peripheral hole 112 may not be formed on the friction member 110. On the basis of a horizontal sectional surface of the friction member 110, the central hole 111 is formed on a central region, preferably, at a center of the friction member. The central hole 111 penetrates the friction member 110 from an upper surface to a lower surface thereof and has a certain diameter. This central hole 111 acts as a passage into which a rivet utilized for securing the supporting member 120 to the back plate 130 is inserted.

The peripheral holes 112 are spaced apart from the central hole 111 toward an outside and spaced from each other at regular angular intervals with respect to the central hole 111. The friction member 110 may have at least three (3) peripheral holes 112. The peripheral hole 112 penetrates the friction member 110 from an upper surface to a lower surface thereof 110 and has a certain diameter. In addition, the central holes 111 and the peripheral holes 112 accommodate particles produced when the friction member 110 is rubbed, to allow a friction between the friction member 110 and the disc to be smoothly achieved. This central hole 111 and the peripheral holes 112 act as passages through which heat generated during a friction is radiated.

The friction member 110 is attached and coupled to an upper surface of the supporting member 120 during a sintering process. Preferably, the friction member 110 is manufactured through sintering process performed at a predetermined temperature. At this time, the friction member 110 may be manufactured by a continuous sintering process. In addition, the friction member 110 may be manufactured through a hot-press sintering process in which heat and pressure are simultaneously applied. The friction member 110 is coupled to the supporting member 120 during the sintering process so that the friction member is secured to the back plate 130.

The friction member 110 comprises a base part formed of metal material and friction-adjusting agent dispersed on the base part and containing non-metal material such as ceramic or graphite. The base part of the friction member 110 may be formed of iron-based alloy containing iron as main ingredient or cooper-based alloy containing cooper as main ingredient. Furthermore, in a case where the base part is formed of iron-based alloy, iron-based alloy may contain ingredients such as manganese (Mn) and molybdenum (Mo) besides iron. In addition, if the base part is formed of cooper-based alloy, cooper based alloy may contain ingredients tin (Sn), nickel (Ni), iron (Fe) and molybdenum (Mo) besides cooper (Cu). In view of all the characteristics such as friction characteristic, heat resistance, durability and the like required for the brake pad 100 of the brake system, accordingly, the base part may be formed selectively of metal material. However, the ingredient of metal material is not limited. The friction-adjusting agent contains material such as alumina, graphite and ceramic such as silicon oxide. In view of all the characteristics such as friction characteristic, heat resistance, durability and the like required for the brake pad 100 of the brake system, various materials may be selectively employed as the ingredient of the friction-adjusting agent. However, the ingredient of the friction-adjusting agent is not limited.

The supporting member 120 is a plate-shaped member having a shape corresponding to a shape of a bottom plane surface of the friction member 110. The supporting 120 has a central protrusion 121 and a peripheral protrusion 122, and the number of the supporting member 120 corresponds to that of the friction member 110. The supporting member 120 supports the friction member 110 coupled to an upper surface thereof.

The central protrusion 121 comprises a central protrusion hole 121 a formed thereon and penetrating the central protrusion from an upper surface to a lower surface of the central protrusion. The central protrusion 121 is protrudely formed by pressing the supporting member 120 in the downward direction. Therefore, the central protrusion 121 has a dome shape which is protruded from a lower surface of the supporting member in the downward direction. In addition, the central protrusion 121 is formed in the shape of a dome obtained by pressing the supporting member 120 in the downward direction. The central protrusion 121 is coupled to the back plate 130 so that a central region of the supporting member 120 is supported to the back plate 130 through the central protrusion 131.

The central protrusion hole 121a penetrates a central region of the central protrusion 121 from an upper surface to a lower surface of the central protrusion and has a certain diameter. This central protrusion hole 121a acts as a passage through which a rivet 125 utilized for securing the supporting member 120 to the back plate 130 is passed.

The supporting member 120 has at least three (3) peripheral protrusions 122 arranged in the circumferential direction. The peripheral protrusions 122 are spaced apart from each other at regular angular intervals with respect to the central protrusion 121. The peripheral protrusion 122 is protrudely formed by pressing the supporting member 120 in the downward direction. Therefore, the peripheral protrusion 122 is formed in the shape of a dome which is protruded from a lower surface of the supporting member in the downward direction. In addition, the peripheral protrusion 122 is formed by pressing the supporting member 120 in the downward direction. The peripheral protrusion 122 is coupled to the back plate 130 so that a peripheral region of the supporting member 120 is supported to the back plate 130 through the peripheral protrusions 131. Furthermore, the peripheral protrusion 122 is coupled to the back plate 130 so as to be moved upwardly and downwardly. Due to the above, when the friction member 110 is rubbed against the brake disc, the supporting member 120 can be moved to allow the friction member to be in entirely and uniformly contact with the brake disc. In addition, the peripheral protrusions 122 prevent the friction member 110 from being rotated when the friction member 110 is rubbed against the brake disc.

The back plate 130 comprises a central supporting part 131, a peripheral supporting part 132, a groove 133 and a slit 134. The back plate 130 is formed of a plate-shaped metal member having a certain thickness. The back plate 130 may have the thickness according to a planar shape required in the brake system and the surface area thereof may be varied according to the number of the friction member 110 to be mounted thereto. In addition, the back plate 130 may be formed of suitable metal material such as alloy steel, special steel and stainless steel according to the required mechanical strength.

A through hole penetrating the back plate 130 from an upper surface to a lower surface thereof or a recess obtained by pressing the back plate 130 in the downward direction is formed as the central supporting part 131. The central supporting part 131 is formed on a place to be corresponded to the central protrusion hole 121 a of the supporting member 120 when the supporting member 120 is mounted to the back plate 130. A rivet passing through the central protrusion hole 121 a of the supporting member 120 passes through or is coupled to the central supporting part 131. Thus, the supporting member 120 is secured to the back plate 130 by the rivet.

A through hole penetrating the back plate 130 from an upper surface to a lower surface thereof or a recess obtained by pressing the back plate in the downward direction is formed as the peripheral supporting part 132. The peripheral supporting part 132 is formed on a place to be corresponded to the peripheral protrusion hole 122 of the supporting member 120 when the supporting member 120 is mounted to the back plate 130. The peripheral protrusion 122 of the supporting member 120 is moveably coupled to the peripheral supporting part 132 to secure the supporting member 120 to the back plate 130.

The groove 133 having certain length and depth is formed on an upper surface (corresponding to a surface of the supporting member 120) and extended in the longitudinal direction. At least two (2) grooves 133 spaced apart from each other are formed in a row. The groove 133 is formed by pressing the back plate 130 so that a protrusion 133a corresponding to the groove 133 is formed on a lower surface of the back plate 130.

As shown in FIG. 3b, on the other hand, a back plate 230 according to another embodiment of the present invention may comprise only one groove 233 extended in the longitudinal direction. In addition, the back plate 230 may comprise a groove through hole 235 formed on the groove 233.

Unlike the grooves 133 shown in FIG. 3a, only one the groove 233 is formed on the back plate 130 along the back plate 230. Accordingly, this structure enables the back plate 230 to be more effectively transformed with respect to the groove 230 in response to a braking pressure.

At least one groove through hole 235 having a certain length is formed in the groove 233 and extended in the direction in which the groove 233 is extended. The groove through hole 235 enables the single groove 233 to be easily transformed.

Referring to FIG. 5, the groove 133 is offset from a center line of the dovetail 140 and a center line of the pad holder (that is, a calliper) to which the dovetail 140 is coupled, by a certain distance.

The slit 134 penetrates the back plate 130 from an upper surface to a lower surface thereof. The slit 134 has a certain length and is perpendicular to the groove 133 at an end of the groove 133. The slit 134 enables the back plate 130 to be transformed with respect to the slit 134 against the exerted braking pressure. As a result, when the braking pressure is exerted, the back plate 130 is transformed with respect to the groove 133 while simultaneously transformed with respect to the slit 134.

Referring to FIG. 6a and FIG. 6b, the dovetail 140 consists of a first dovetail 140a and a second dovetail 140b. The first dovetail 140a and the second dovetail 140b have the same shape and mirror-symmetrically mounted to the back plate 130 as shown in FIG. 2. The dovetail 140 is coupled to a lower surface of the back plate 130, which is opposite to a surface on which the friction member 110 is secured. On the other hand, the shape of the dovetail 140 is not limited to that shown in the drawings, the dovetail may have various shapes according to the specification of the brake system employing the brake pad 100. In addition, the dovetail 140 is formed of metal material.

Since the first dovetail 140a and the second dovetail 140b of the dovetail 140 are separately coupled to the back plate 130, two dovetails 140a and 140b can be independently transformed when the braking pressure is applied to the dovetail 140. Accordingly, the first dovetail 140a and the second dovetail 140b apply individually the pressure to the back plate 130 to enable regions of the back plate 130 to be differently transformed.

The first dovetail 140a and the second dovetail 140b have a certain length, and each dovetail comprises a first portion 141 extended from a central portion in the lengthwise direction, a second portion 142 and a third portion 143 extended from both side ends of the first portion 141 in a first direction (upward direction in the drawing), respectively, a fourth portion 144 extended horizontally from a side end of the third portion 143 toward a side which is opposite to the first portion 141 and a fifth portion 145 extended from an end of the fifth portion 144 in a second direction (downward direction in the drawing) which is opposite to the first direction.

The first portion 141 is a portion which is in contact with and welded to the back plate 130. The second portion 142 and the third portion 143 are extended and inclined upwardly from both side ends of the first portion 141. The second portion 142 and the third portion 143 are in contact with the pad holder 150 to allow the pressure to be transmitted from the pad holder 150 to the first and second portions. In addition, the second portion 142 acts as a coupling slot when the brake pad is coupled to the pad holder 150. Furthermore, the third portion 143 provides a space which can receive the protrusion 133a of the back plate 130.

The fourth portion 144 is extended from the third portion 143 in the horizontal direction and enlarges a contact area between the dovetail 140 and the pad holder 150.

The fifth portion 145 is extended downwardly from the fourth portion 144 and enlarges a side surface area of the dovetail 140. Thus, after the dovetail 140 is coupled to the pad holder, the fifth portion 145 enlarges a contact area between the dovetail and a securing pin (not shown in the drawing) employed for supporting the dovetail to enable the dovetail 140 to be more stably supported.

Furthermore, each of the first dovetail 140a and the second dovetail 140b may further comprise a welding position setting hole 146 formed on the first portion by pressing the first portion. A welding jig is inserted into the welding position setting hole 146 to support the dovetail 140 and to allow the dovetail 140 to be welded to a certain area of the back plate.

On the other hand, the reference numeral "148" which is not illustrated indicates a welding point which is formed when the dovetail 140 is welded to the back plate 130.

Referring to FIG. 6c, a dovetail 240 according to another embodiment of the present invention does not have the fifth portion 145 of the dovetail 140 according to the embodiment shown in FIG. 6b. The fourth portion should be bent to form the fifth portion, however, it is very difficult to form the fifth portion since a height of the fifth portion is small.

In a dovetail 340 according to yet another embodiment of the present invention, referring to FIG. 6d, forth portions of a first dovetail 340a and a second dovetail 340b, which adjacent to each other, are integrally formed with each other. In other words, the first dovetail 340a and the second dovetail 340b may be formed integrally with each other.

A dovetail 440 according to further another embodiment of the present invention may comprises a welding jig protrusion 446 formed by pressing the dovetail from an upper surface to a lower surface. The welding jig protrusion 446 is inserted into a welding jig recess formed on the back plate 130 to enable the dovetail 440 to be always welded at a constant location.

Next, an operation of the disc pad according to one embodiment of the present invention is illustrated with reference to the drawings.

As shown in FIG. 1, in a state where the friction member 100, the supporting member 120, the back plate 130 and the dovetail 140 are assembled, the dovetail 140 is coupled to the pad holder 150 in a dovetail manner to mount the brake pad 100 to the brake assembly. At this time, as shown in FIG. 5, a center of the pad holder (calliper) and the groove 133 formed on the back plate 130 are spaced apart from a center of the dovetail 140 (that is, a boundary line between the first dovetail 140a and the second dovetail 140b) by a certain distance.

The braking pressure of the brake system is transmitted the brake pad 100 via the pad holder 150 and the dovetail 140. At this time, since the center line of the pad holder 150 is spaced apart from the boundary line between the first dovetail 140a and the second dovetail 140b, the pressure which differs that applied to the first dovetail 140a is applied to the second dovetail 140b. In addition, the pressures differing from each other are applied to regions of the back plate 130 according to the pressures applied to the first dovetail 140a and the second dovetail 140b so that a region of the back plate adjacent to the groove 133 and a region of the back plate adjacent to the slit 134 are differently transformed. The groove 133 of the back plate 130 absorbs some of the braking pressure and allows the uniform braking pressure to be applied to the overall surface of the back plate 130. As a result, the uniform braking pressure is transmitted to the friction member 110. Accordingly, the brake pad 100 allows the friction member 110 to be uniformly rubbed and worn. Furthermore, the brake pad 100 is in uniform contact with the brake disc and transmits the braking pressure to prevent a specific region of the brake pad from being unevenly worn.

In the meantime, the dovetail 140 consists of the first dovetail 140a and the second dovetail 140b separated from each other so that even though an excessive pressure is applied to the specific one (for example, the first dovetail 140a or the second dovetail 140b) of the dovetail 140, the other is not influenced by the excessive pressure to enable the pressure to be uniformly transmitted to the friction member 110 and the brake disc.

In the brake pad according to the present invention, the dovetail to be mounted to the pad holder consists of two separate members or comprises the groove formed thereon and extended in the longitudinal direction corresponding to the center line of the pad holder so that the brake pad becomes in entirely uniform contact with the brake disc.

In the brake pad according to the present invention, the peripheral protrusion of the supporting member is vertically and moveably coupled to the peripheral supporting part of the back plate to allow the friction to be in entirely uniform contact with the brake disc.

Without employing an additional elastic member, the brake pad according to the present invention gives a flexibility ratio against the braking pressure and minimizes a change of the braking characteristic caused by braking conditions (velocity, braking pressure, pressure, humidity and the like).

While the invention has been shown and described with reference to certain exemplary embodiments thereof, the technical scope of the present invention is not limited to the above embodiment, and it will be understood by those skilled in the art that various changes, modifications and additions as well as equivalent embodiments may be made therein without departing from the scope of the invention as defined by the appended claims.

## Claims

1. A brake pad (100) comprising:
at least one friction member;
a supporting member (120) for supporting the friction member (110), the number of which being the same as that of the friction member (110);
a back plate (130) to which the supporting member (120) is secured; and
a dovetail (140) coupled to a lower surface of the back plate (130);
**characterized in that**,
the back plate (130) comprises at least two grooves (133) formed on a surface thereof corresponding to the supporting member (120), the grooves (133) having a certain length and depth and extended to the longitudinal direction and spaced apart from each other, and **in that**
the supporting member (120) comprises a central protrusion (121) protruded downward and three periphery protrusions (122) arranged in the circumferential direction with respect to the central protrusion (121), and the back plate (130) comprises a central supporting part (131) formed on a region thereof corresponding to the central protrusion (121) and periphery supporting parts (132) formed on regions thereof corresponding to the periphery protrusions (122) and coupled to the periphery protrusions (122), respectively.

2. The brake pad (100) of claim 1, wherein the dovetail (140) consists of a first dovetail (140a) and a second dovetail (140b), each of the first and second dovetails (140a; 140b) comprises a first portion (141) extended from a central portion in the lengthwise direction; a second portion (142) and a third portion (143) extended from both side ends of the first portion (141) in a first direction, respectively; and a fourth portion (144) extended horizontally from a side end of the third portion (143) toward a side which is opposite to the first portion (141).

3. The brake pad (100) of claim 2, wherein each of the first dovetail (140a) and the second dovetail (140b) further comprises a fifth portion (145) extended from an end of the fourth portion (144) in a second direction which is opposite to the first direction.

4. The brake pad (100) of any one of the preceding claims, wherein the first dovetail (140a) and the second dovetail (140b) have the same shape and mirror-symmetrically mounted to the back plate (130).

5. The brake pad (100) of any one of the preceding claims, wherein the back plate (130) comprises a slit (134) extended from an end of the groove (133) in the direction which is perpendicular to the groove (133).

6. The brake pad (100) of any one of the preceding claims, wherein the grooves (133) are connected to and formed integrally with each other.

7. The brake pad (100) of any one of the preceding claims, wherein the back plate (230) further comprises a groove through hole (235) formed in the groove (233) and extended in the direction in which the groove (233) is extended.

8. The brake pad (100) of any one of the preceding claims, wherein the groove (133) is offset from a boundary line between the first dovetail (140a) and the second dovetail (140b) by a certain distance.

## Patentansprüche

1. Bremsbelag (100), aufweisend:
zumindest ein Reibelement,
ein Trägerelement (120) zum Tragen des Reibelements (110), wobei die Anzahl dieses die gleiche ist wie diejenige des Reibelements (110),
eine Rückplatte (130), an der das Trägerelement (120) gesichert ist, und
ein Schwalbenschwanz (140), der mit einer unteren Fläche der Rückplatte (130) gekoppelt ist,
**dadurch gekennzeichnet, dass**
die Rückplatte (130) zumindest zwei Nuten (133) aufweist, die an einer Fläche hiervon ausgebildet sind, die dem Trägerelement (120) entspricht, wobei die Nuten (133) eine bestimmte Länge und Tiefe aufweisen und zur Längsrichtung verlängert sind und voneinander beabstandet sind, und dadurch, dass
das Trägerelement (120) einen Mittenvorsprung (121), der nach unten vorsteht, und drei Umfangsvorsprünge (122) aufweist, die in der Umfangsrichtung bezüglich des Mittenvorsprungs (121) angeordnet sind, und die Rückplatte (130) ein Mittenträgerteil (131), der an einer Region hiervon ausgebildet ist, die dem Mittenvorsprung (121) entspricht, und Umfangsträgerteile (132) aufweist, die an Regionen hiervon ausgebildet sind, die den Umfangsvorsprüngen (122) entsprechen und entsprechend mit den Umfangsvorsprüngen (122) gekoppelt sind.

2. Bremsbelag (100) gemäß Anspruch 1, bei dem der Schwalbenschwanz (140) einen ersten Schwalbenschwanz (140a) und einen zweiten Schwalbenschwanz (140b) aufweist, wobei sowohl der erste als auch der zweite Schwalbenschwanz (140a, 140b) einen ersten Abschnitt (141), der von einem Mittenabschnitt in der Längsrichtung verlängert ist, einen zweiten Abschnitt (142) und einen dritten Abschnitt (143), die von beiden Seitenenden des ersten Abschnitts (141) in einer ersten Richtung entsprechend verlängert sind, und einen vierten Abschnitt (144) aufweist, der horizontal von einem Seitenende des dritten Abschnitts (143) zu einer Seite verlängert ist, die dem ersten Abschnitt (141) gegenüberliegt.

3. Bremsbelag (100) gemäß Anspruch 2, bei dem sowohl der erste Schwalbenschwanz (140a) als auch der zweite Schwalbenschwanz (140b) ferner einen fünften Abschnitt (145) aufweist, der von einem Ende des vierten Abschnitts (144) in einer zweiten Richtung verlängert ist, die entgegen der ersten Richtung ist.

4. Bremsbelag (100) gemäß einem der vorangegangenen Ansprüche, bei dem der erste Schwalbenschwanz (140a) und der zweite Schwalbenschwanz (140b) die gleiche Gestalt aufweisen und spiegelsymmetrisch an der Rückplatte (130) befestigt sind.

5. Bremsbelag (100) gemäß einem der vorangegangenen Ansprüche, bei dem die Rückplatte (130) einen Spalt (134) aufweist, der von einem Ende der Nut (133) in der Richtung verlängert ist, die senkrecht zur Nut (133) befindlich ist.

6. Bremsbelag (100) gemäß einem der vorangegangenen Ansprüche, bei dem die Nuten (133) miteinander verbunden sind und integral miteinander ausgebildet sind.

7. Bremsbelag (100) gemäß einem der vorangegangenen Ansprüche, bei dem die Rückplatte (230) ferner eine Nutdurchgangsausnehmung (235) aufweist, die in der Nut (233) ausgebildet ist und in der Richtung verlängert ist, in der die Nut (233) verlängert ist.

8. Bremsbelag (100) gemäß einem der vorangegangenen Ansprüche, bei dem die Nut (133) von einer Grenzlinie zwischen dem ersten Schwalbenschwanz (140a) und dem zweiten Schwalbenschwanz (140b) um einen bestimmten Abstand versetzt ist.

## Revendications

1. Plaquette de frein (100) comprenant :
au moins un élément de friction ;
un élément de support (120) pour supporter l'élément de friction (110), dont le nombre est le même que celui de l'élément de friction (110) ;
une plaque arrière (130) à laquelle l'élément de support (120) est fixé ; et
une queue d'aronde (140) couplée à une surface inférieure de la plaque arrière (130) ;
**caractérisée en ce que**,
la plaque arrière (130) comprend au moins deux rainures (133) formées sur une surface de celle-ci correspondant à l'élément de support (120), les rainures (133) ayant une certaine longueur et profondeur et étant étendues vers la direction longitudinale et mutuellement espacées, et **en ce que**
l'élément de support (120) comprend une saillie centrale (121) en saillie vers le bas et trois saillies périphériques (122) agencées dans la direction circonférentielle par rapport à la saillie centrale (121), et la plaque arrière (130) comprend une partie de support centrale (131) formée sur une région de celle-ci correspondant à la saillie centrale (121) et des parties de support périphériques (132) formées sur des régions de celle-ci correspondant aux saillies périphériques (122) et couplées aux saillies périphériques (122), respectivement.

2. Plaquette de frein (100) selon la revendication 1, dans laquelle la queue d'aronde (140) est constituée d'une première queue d'aronde (140a) et d'une deuxième queue d'aronde (140b), chacune des première et deuxième queues d'aronde (140a ; 140b) comprend une première portion (141) étendue d'une portion centrale dans la direction de longueur; une deuxième portion (142) et une troisième portion (143) étendues des deux extrémités latérales de la première portion (141) dans une première direction, respectivement; et une quatrième portion (144) étendue horizontalement d'une extrémité latérale de la troisième portion (143) vers un côté qui est opposé à la première portion (141).

3. Plaquette de frein (100) selon la revendication 2, dans laquelle chacune de la première queue d'aronde (140a) et de la deuxième queue d'aronde (140b) comprend en outre une cinquième portion (145) étendue d'une extrémité de la quatrième portion (144) dans une deuxième direction qui est opposée à la première direction.

4. Plaquette de frein (100) selon l'une quelconque des revendications précédentes, dans laquelle la première queue d'aronde (140a) et la deuxième queue d'aronde (140b) ont la même forme et sont montées en symétrie miroir à la plaque arrière (130).

5. Plaquette de frein (100) selon l'une quelconque des revendications précédentes, dans laquelle la plaque arrière (130) comprend une fente (134) étendue d'une extrémité de la rainure (133) dans la direction qui est perpendiculaire à la rainure (133).

6. Plaquette de frein (100) selon l'une quelconque des revendications précédentes, dans laquelle les rainures (133) sont reliées et formées intégralement ensemble.

7. Plaquette de frein (100) selon l'une quelconque des revendications précédentes, dans laquelle la plaque arrière (230) comprend en outre un trou traversant de rainure (235) formé dans la rainure (233) et étendu dans la direction dans laquelle la rainure (233) s'étend.

8. Plaquette de frein (100) selon l'une quelconque des revendications précédentes, dans laquelle la rainure (133) est décalée d'une ligne de délimitation entre la première queue d'aronde (140a) et la deuxième queue d'aronde (140b) d'une certaine distance.
